# EUROPEAN PATENT APPLICATION

(11) **EP 4 566 818 A1**
(43) Date of publication of application: **11.06.2025**
(21) Application number: 23214371.9
(22) Date of filing: 05.12.2023
(51) Int. Cl.: B32B 29/00, D21H 11/04, D21H 11/08, D21H 11/10, D21H 17/15, D21H 17/17

(54) **LIQUID PACKAGING BOARD**

(71) Applicant: Billerud Aktiebolag (publ), 169 27 Solna (SE)
(72) Inventor: NYGÅRDS, Mikael, 146 50 Tullinge (SE); NORDSTRÖM, Fredrik, 652 26 Karlstad (SE); ATTEMALM, Adam, 653 50 Karlstad (SE)
(74) Representative: Kransell & Wennborg KB

(57) **Abstract**

There is provided a method of producing a multi-layered liquid packaging board (LPB) comprising a print layer, a back layer and a middle layer, said method comprising the steps of:
- providing a maple chemithermomechanical pulp (CTMP) and forming a middle layer furnish comprising the maple CTMP, broke pulp and hydrophobic size;
- forming a middle layer web from the middle layer furnish in a forming section of a full-scale paperboard machine;
- forming a print layer web from a print layer furnish in the forming section, which print layer furnish comprises hydrophobic size;
- forming a back layer web from a back layer furnish in the forming section, which back layer furnish comprises hydrophobic size; and
- form a multi-layered LPB from the print layer web, middle layer web and back layer web so that the middle layer is arranged between the print layer and the back layer.

## Description

### TECHNICAL FIELD

The present disclosure relates to the field of manufacture of liquid packaging board.

### BACKGROUND

Liquid packaging board (LPB) is an engineered material that often consists of different layers and interfaces. This generates an out-of-plane (z) profile that can be designed for optimal functionality or cost performance. Commercial LPB often has a relatively bulky middle ply to obtain high bending stiffness with a low grammage of of fibers.

Creasing and subsequent folding is necessary to convert LPB into packages. In the creasing operation, a male ruler is pressed against the board, which is positioned on top of a female die. The purpose of the creasing operation is to facilitate subsequent folding of the LPB and forming of the package. During folding and forming, there is however a risk of cracking.

### SUMMARY

An objective of the present disclosure is to provide for reduced cracking tendency of LPB during folding and forming.

Accordingly, the present disclosure provides the following list of itemized embodiments:
1. A method of producing a multi-layered liquid packaging board (LPB) comprising a print layer, a back layer and a middle layer, said method comprising the steps of:
   - providing a maple chemithermomechanical pulp (CTMP) and forming a middle layer furnish comprising the maple CTMP, broke pulp and hydrophobic size;
   - forming a middle layer web from the middle layer furnish in a forming section of a full-scale paperboard machine;
   - forming a print layer web from a print layer furnish in the forming section, which print layer furnish comprises hydrophobic size;
   - forming a back layer web from a back layer furnish in the forming section, which back layer furnish comprises hydrophobic size; and
   - forming a multi-layered LPB from the print layer web, middle layer web and back layer web so that the middle layer is arranged between the print layer and the back layer.
2. The method of item 1, wherein the maple CTMP has a Canadian standard freeness (CSF) measured according to ISO 5267-2:2001 of 300-600 ml, such as 300-500 ml, such as 310-450 ml.
3. The method of item 1 or 2, wherein the proportion of maple CTMP in the middle layer furnish is 5-55% by dry weight, such as 10-55% by dry weight, such as 25-55% by dry weight, such as 30-50% by dry weight.
4. The method of any one of the preceding items, wherein the proportion of broke pulp in the middle layer furnish is 25-55% by dry weight, such as 30-50% by dry weight.
5. The method of any one of the preceding items, wherein the proportion of kraft pulp in the middle layer furnish is 0-35% by dry weight, such as 5-30% by dry weight.
6. The method of any one of the preceding items, wherein the provided maple CTMP is obtained by post-refining maple CTMP from a CTMP production process.
7. The method of item 6, wherein the maple CTMP in the middle layer furnish has been refined to 10-100 kWh/t, such as 10-50 kWh/t, such as 10-30 kWh/t.
8. The method of any one of the preceding items, wherein the amount of hydrophobic size in the print layer furnish is at least 1.5 kg/tonne dry fibre, such as at least 2.0 kg/tonne dry fibre.
9. The method of any one of the preceding items, wherein the amount of hydrophobic size in the back layer furnish is at least 1.5 kg/tonne dry fibre, such as at least 2.0 kg/tonne dry fibre.
10. The method of any one of the preceding items, wherein the amount of hydrophobic size in the middle layer furnish is at least 2.5 kg/tonne dry fibre, such as at least 3.5 kg/tonne dry fibre.
11. The method of any one of the preceding items, wherein:
   the hydrophobic size in the print layer furnish is selected from the group consisting of ASA, AKD, rosin size and combinations thereof;
   the hydrophobic size in the back layer furnish is selected from the group consisting of ASA, AKD, rosin size and combinations thereof; and/or
   the hydrophobic size in the middle layer furnish is selected from the group consisting of ASA, AKD, rosin size and combinations thereof.
12. The method of any one of the preceding items, wherein the z-directional (ZD) tensile strength according to Tappi T 541 of the multi-layered LPB is at least 240 kPa, such as at least 300 kPa.
13. The method of any one of the preceding items, wherein Scott Bond strength of the multi-layered LPB is 145-305 J/m², such as 150-250 J/m² measured according to TAPPI T 569 om-09.
14. The method of any one of the preceding items, wherein less than 1 g/m² of starch is provided in the interface between the print layer web and the middle layer web.
15. The method of any one of the preceding items, wherein the maple CTMP is bleached.
16. The method of any one of the preceding items, wherein the print layer furnish comprises kraft pulp in an amount of at least 80% by dry weight, such as at least 90% by dry weight.
17. The method of item 16, wherein the kraft pulp in the print layer furnish is bleached.
18. The method of any one of the preceding items, wherein the back layer furnish comprises kraft pulp in an amount of at least 80% by dry weight, such as at least 90% by dry weight.
19. The method of item 18, wherein the kraft pulp in the back layer furnish is bleached.
20. The method of any one of the preceding items, wherein the multi-layered LPB is calendered.
21. The method of item 20, wherein the line load in the calendering is 30-300 kN/m, such as 30-250, such as 30-60 kN/m.
22. The method of any one of the preceding items, wherein the Parker Print Surf (PPS) roughness measured according to ISO 8791-4:2007 of the print layer of the paperboard is below 3.0 µm, such as below 2.0 µm.
23. The method of any one of the preceding items, wherein the grammage according to ISO 536:2020 of the paperboard is 150-400 g/m², such as 180-350 g/m².
24. The method of any one of the preceding items, wherein the grammage according to ISO 536:2020 of the print layer web is 35-90 g/m², such as 45-80 g/m².
25. The method of any one of the preceding items, wherein the grammage according to ISO 536:2020 of the back layer web is 30-70 g/m², such as 40-65 g/m².
26. The method of any one of the preceding items, wherein the grammage according to ISO 536:2020 of the middle layer web is 70-150 g/m², such as 80-130 g/m².
27. The method of any one of the preceding items, wherein the density according to ISO 534:2011 of the multi-layered LPB is 640-820 kg/m³, such as 650-800 kg/m³.
28. The method of any one of the preceding items, wherein the thickness according to ISO 534:2011 of the multi-layered LPB is 220-600 µm, such as 250-550 µm.
29. The method of any one of the preceding items, wherein the geometrical short-span compression test (SCT) index according to ISO 9895:2008 of the multi-layered LPB is at least 22 Nm/g.
30. The method of any one of the preceding items, wherein the geometric bending resistance index measured according to ISO 2493-2:2020 of the multi-layered LPB is at least 9 mNm⁶/g³, such as at least 10 mNm⁶/g³.
31. A multi-layered liquid packaging board (LPB) comprising a print layer, a back layer and a middle layer, wherein:
   - the middle layer is arranged between the print layer and the back layer;
   - the middle layer is formed from a middle layer furnish comprising maple chemithermomechanical pulp (CTMP), broke pulp and hydrophobic size;
   - the print layer is formed from a print layer furnish, which print layer furnish comprises hydrophobic size;
   - the back layer is formed from a back layer furnish, which print layer furnish comprises hydrophobic size.
32. The multi-layered LPB of item 31, wherein the proportion of maple CTMP in the middle layer is 5-55% by dry weight, such as 10-55% by dry weight, such as 25-55% by dry weight, such as 30-50% by dry weight.
33. The multi-layered LPB of item 31 or 32, wherein the proportion of broke pulp in the middle layer is 25-55% by dry weight, such as 30-50% by dry weight.
34. The multi-layered LPB of any one of items 31-33, wherein the proportion of kraft pulp in the middle layer is 0-35% by dry weight, such as 5-30% by dry weight.
35. The multi-layered LPB of any one of items 31-34, wherein the amount of hydrophobic size in the print layer is at least 1.5 kg/tonne dry fibre, such as at least 2.0 kg/tonne dry fibre.
36. The multi-layered LPB of any one of items 31-35, wherein the amount of hydrophobic size in the back layer is at least 1.5 kg/tonne dry fibre, such as at least 2.0 kg/tonne dry fibre.
37. The multi-layered LPB of any one of items 31-36, wherein the amount of hydrophobic size in the middle layer is at least 2.5 kg/tonne dry fibre, such as at least 3.5 kg/tonne dry fibre.
38. Use of the multi-layered LPB according to any one of items 31-37 in liquid packaging.

### BRIEF DESCRIPTION OF THE DRAWINGS

Fig 1 shows ZD tensile strength measured according to Tappi T 541 plotted against density of a multi-layered paperboard with varied source of CTMP in the middle layer.
Fig 2 shows geometric SCT-index for multi-layered paperboard of different thicknesses with varied source of CTMP in the middle layer.
Fig 3 shows Bendtsen surface roughness of the print layer of multi-layered paperboard of different thicknesses with varied source of CTMP in the middle layer.
Fig 4 shows PPS roughness of the print layer of multi-layered paperboard of different thicknesses with varied source of CTMP in the middle layer.

### DETAILED DESCRIPTION

The present disclosure provides a method of producing a multi-layered liquid packaging board (LPB) comprising a print layer, a back layer and a middle layer, said method comprising the steps of:
- providing a maple chemithermomechanical pulp (CTMP) and forming a middle layer furnish comprising the maple CTMP, broke pulp and hydrophobic size;
- forming a middle layer web from the middle layer furnish in a forming section of a full-scale paperboard machine;
- forming a print layer web from a print layer furnish in the forming section, which print layer furnish comprises hydrophobic size;
- forming a back layer web from a back layer furnish in the forming section, which back layer furnish comprises hydrophobic size; and
- forming a multi-layered LPB from the print layer web, middle layer web and back layer web so that the middle layer is arranged between the print layer and the back layer.

The presence of hydrophobic size in each of the above-mentioned furnishes is typical for a method of manufacturing LPB.

The amount of hydrophobic size in each of the print layer furnish and the back layer furnish is preferably at least 1.5 kg/tonne dry fibre, such as at least 2.0 kg/tonne dry fibre.

The amount of hydrophobic size in the middle layer furnish is typically greater than in any of the print layer furnish and the back layer furnish. As an example, it may be at least 2.5 kg/tonne dry fibre, such as at least 3.5 kg/tonne dry fibre.

The hydrophobic size in each of the print layer furnish, the back layer furnish and the middle layer furnish may for example be independently selected from the group consisting of alkenyl succinic anhydride (ASA), alkyl ketene dimer (AKD), rosin size and combinations thereof. In a preferred embodiment, the hydrophobic size in each of the furnishes is a combination of AKD and rosin size. When such a combination is used, the headbox pH of the furnishes is preferably in the range of 6.6-7.2, such as 6.9-7.1.

Maple CTMP is a bulky mechanical pulp. It is beneficial to include maple CTMP in the middle layer as it decreases the density, i.e. increases the bulk, of the LPB. A high bulk is preferred as less fibres are used per gram of LPB. By designing the LPB in an I-beam structure with chemical pulp in the outer layers and bulky mechanical pulp in the middle layer, strength properties are provided. Within the content of the present disclosure, maple CTMP also includes maple high-temperature chemithermomechanical pulp (maple HT-CTMP). When producing maple HT-CTMP a higher preheating temperature, typically above 150 °C, is used to produce the pulp. The maple CTMP is preferably bleached.

The proportion of maple CTMP in the middle layer furnish is typically 5-55% by dry weight, such as 10-55% by dry weight, such as 25-55% by dry weight, such as 30-50% by dry weight. Typically, maple CTMP constitutes at least 90 % by dry weight, such as at least 95 % by dry weight such as 100 % by dry weight of the total CTMP content of the middle layer furnish.

The maple CTMP provided in the middle layer furnish typically has a Canadian standard freeness (CSF) measured according to ISO 5267-2:2001 of 300-600 ml, such as 300-500 ml, such as 310-450 ml measured according to ISO 5267-2:2001. Such a relatively low CSF value is associated with a favorable middle layer strength to interface strength ratio in the z direction. Typically, the maple CTMP is obtained by post-refining maple CTMP from a CTMP production process. Typically, the maple CTMP in the middle layer furnish has been refined to 10-100 kWh/t, such as 10-50 kWh/t, such as 10-30 kWh/t (herein "kWh/t" means kWh per tonne dry weight). As understood, such post-refining is carried out in the stock preparation area of the LPB production process.

The strength of the middle layer may be further improved by addition of starch to the middle layer furnish. Starch is preferably added in an amount of 1.5-7.0 kg/tonne based on dry weight of the middle layer furnish, such as 2.0-6.0 kg/tonne based on dry weight of the middle layer furnish.

Typically, less than 1 g/m², such as less than 0.9 g/m² of starch may be provided in the interface between the print layer web and the middle layer web and/or between the back layer web and the middle layer web. Consequently, in one embodiment of the method, no starch is provided in the interface between the print layer web and the middle layer web and/or between the back layer web and the middle layer web. For the avoidance of doubt, this does not include starch added to any of the furnishes upstream the headboxes, i.e. to the furnishes. This is beneficial in order to reduce the strength of the interface between the print layer and the middle layer and/or between the back layer and the middle layer and thereby avoid delamination and/or crack initiation in the middle layer during folding.

Typically, the length-weighted average fibre length of said maple CTMP as measured according to ISO 16065-2:2014 is equal to or below 1.0 mm, such as equal to or below 0.9 mm. Measurements of pulp lengths can be conducted with an instrument MAP-Q from Valmet OY if the measurements are conducted off-line in lab scale. Alternatively, the measurements can be conducted on-line, and the instrument MAP from Valmet OY can in such case be used.

Broke pulp is formed from trimmings and/or produced, but damaged (or otherwise wasted), board. Typically, the proportion of broke pulp in the middle layer furnish is 25-55% by dry weight, such as 30-50% by dry weight. A suitable Schopper-Riegler (SR) number for the broke pulp is °20-°40, such as °22-°38. Such a SR number may be obtained by adapting the degree of refining of the broke pulp. The SR number is measured according to ISO 5267-1:1999. Typically, the broke pulp in the middle layer furnish has been refined with 15-50 kWh/t to provide the particular SR number. The broke pulp is typically obtained from the method of the first aspect, which means that it has the same fibre composition as the multi-layered LPB.

Typically, the proportion of kraft pulp in the middle layer furnish is 0-35% by dry weight, such as 5-30% by dry weight. A particularly preferred type of kraft pulp is bleached kraft pulp. Inclusion of kraft pulp in the middle layer furnish is beneficial in terms of strength properties, but it is not essential to include kraft pulp. One reason for including chemical pulp (preferably bleached kraft pulp), which is relatively strong type of pulp, is to balance the CTMP, which is a relatively weak type of pulp.

In one preferred embodiment the amount of CTMP in the middle layer furnish is 5-55% by dry weight, the amount of kraft pulp in the middle layer furnish is 5-30% by dry weight and the amount of broke pulp in the middle layer furnish is 25-55% by dry weight.

In another preferred embodiment the amount of CTMP in the middle layer furnish is 25-55% by dry weight, the amount of kraft pulp in the middle layer furnish is 0-35% by dry weight and the amount of broke pulp in the middle layer furnish is 25-55% by dry weight.

The print layer furnish typically comprises kraft pulp in an amount of at least 80% by dry weight, such as at least 90% by dry weight. The proportion of kraft pulp in the back layer furnish may be at least 80% by dry weight, such as at least 90% by dry weight. The print layer furnish typically comprises at least 30% by dry weight, such as at least 50% by dry weight hardwood kraft pulp. The print layer furnish preferably comprises a mix of hardwood and softwood kraft pulp, such as at least 50% by dry weight hardwood kraft pulp and at least 20% by dry weight of softwood kraft pulp, such as at least 65% by dry weight hardwood kraft pulp and at least 20% by dry weight of softwood kraft pulp. The back layer furnish preferably comprises at least the same amount of softwood kraft pulp as the print layer furnish. The back layer furnish may comprise at least 80% by dry weight softwood kraft pulp. The kraft pulp in the print layer furnish as well as the bottom layer furnish may be bleached.

The method may comprise the step of coating the print layer with at least one coating layer. The at least one coating layer is typically pigment-based. The total coat weight (dry) may be 12-30 g/m². The print layer may be coated with more than one coating, such as a dual-layer coating or triple-layer coating. Suitable pigments are clay and/or calcium carbonate and/or talc. In case of a dual-layer coating, drying between the application of a first coating layer and the application of a second coating layer can be conducted. For the single layer coating, drying is conducted after coating. Drying is typically performed with non-contact drying, such as IR and/or hot air, or contact drying, such as with drying cylinder(s), or a combination of non-contact and contact drying. The present disclosure is not limited to any particular coating technique and several different types of techniques, can thus be used. The techniques include: blade coating, rod coating, air-knife coating, rotogravure coating and/or curtain coating. All coatings may be applied in-line (also referred to as on-line). In such case, the productivity is increased by eliminating the handling operations linked to off-line treatment and by eliminating, or at least reducing, the amount of waste. Alternatively, the coatings may also be applied off-line.

The maple CTMP and the kraft pulp are preferably virgin pulps. Alternatively, in one embodiment, at least one of the virgin pulps is partly replaced by secondary fibres.

Typically, the pulps are never-dried provided from an integrated pulp mill. One or more of the pulps may also be market pulps.

The internal bond strength, Scott Bond, according to Tappi T 569 Scott type of the multi-layered LPB is typically 145-305 J/m², such as 150-250 J/m². The ZD tensile strength according to Tappi T 541 of the multi-layered LPB is typically at least 240 kPa, such as at least 300 kPa. In particular the strength properties in the z-direction are mechanical properties that benefit from the usage of maple CTMP as particular source for the CTMP.

It is known from earlier research that delamination in the interfaces rather than in the middle layer significantly reduces the cracking tendency during converting to the LPB to beverage cartons (Nygårds et al., PAPER PHYSICS, Nordic Pulp & Paper Research Journal Vol 29 no (3) 2014). The inventors have realized that a multi-layer LPB having a "W-structure" in terms of strength, with strong chemical pulp in the outer layers as well as a both strong and bulky middle-layer reduces the cracking tendency during converting.

The inventors have realized that the combination of maple CTMP and broke pulp in the middle layer of the multi-layered LPB provides a combination of desirable mechanical properties in z-direction, which balance both ZD tensile strength and Scott Bond, which is beneficial for use as a liquid packaging board. Moreover, the maple CTMP and broke pulp in the the middle layer of the multi-layered LPB provides a beneficial strength profile with strong print and back layers as well as middle layer, which directs delamination to the interfaces between the middle layer and print and back layers, as the interfaces then are weaker than the internal strength of the layers.

The geometrical short-span compression test (SCT) index according to ISO 9895:2008 of the multi-layered LPB is typically at least 22 Nm/g. Geometric SCT index is calculated as the square root of the product of the SCT index in machine direction (MD) and cross direction (CD). The SCT index defines the compression strength of the multi-layered LPB and geometrical SCT-index is a mechanical property that benefit from the usage of maple CTMP as particular source for the CTMP.

The geometric bending resistance index measured according to ISO 2493-2:2020 of the multi-layered LPB is typically at least 9 mNm⁶/g³, such as at least 10 mNm⁶/g³.

Retention aid(s) may be added to the furnishes in the manufacturing of the multi-layered LPB. It is generally a desire to keep the amount of retention aid(s) as low as possible from a cost perspective. There may be added a cationic retention aid to the middle layer furnish containing maple CTMP in an amount of 250-700 g/tonne, such as in an amount of 330-650 g/tonne based on dry weight of the middle layer furnish in combination with addition of an anionic retention aid to the middle layer furnish in an amount of 420-700 g/tonne, such as in an amount of 450-650 g/tonne based on dry weight of the middle layer furnish. The cationic retention aid is typically cationic polyacrylamide (cPAM), polyethyleneimine (PEI) or cationic starch, and the anionic retention aid is typically silica microparticles or bentonite clay. In one embodiment, the cationic retention aid is cPAM or PEI and the anionic retention aid is silica microparticles.

Typically, the print layer furnish, middle layer furnish and back layer furnish are each provided from separate headboxes on separate forming wires and thereafter combined, for example by couching and/or in the press section of the board machine. Alternatively, all three furnishes are provided from a multi-layer headbox directly onto one forming wire.

In case, the print layer web is merged with the middle layer web by couching. The back layer web may also be merged with the middle layer web by couching. This is typically done at a couching dryness above 10%, such as above 13%. Couching at such dryness is beneficial in respect to further reduce the strength of the interface between the print layer and the middle layer, and if also used to reduce the strength of the interface between the back layer and the middle layer. Thereby delamination in the middle layer during folding is reduced. Here, couching dryness refers to the dryness of the print layer web at the point of couching. In one embodiment, the print layer web and the middle layer web both have a dryness above 10%, such as above 13%, at the point of couching.

Surface properties of the multi-layered LPB includes Bendtsen surface roughness. Bendtsen surface roughness is measured according to ISO 8791-2:2013. The Bendtsen surface roughness of the print layer is typically below 300 ml/min, such as below 150 ml/min. The Bendtsen surface roughness of the back layer is typically below 2000 ml/min, such as below 1500 ml/min. It is preferred that the surface roughness of the print layer is lower than the surface roughness of the back layer since the print layer is used facing the customer. Another surface property is Parker Print Surf (PPS) roughness (µm) measured according to ISO 8791-4:2007. The PPS roughness of the print layer of the multi-layered LPB is typically below 3.0 µm, such as below 2.0 µm. The multi-layered LPB is typically calendered. Calendering is beneficial for surface smoothness. The line load in the calendering is typically 30-300 kN/m, such as 30-250 kN/m, such as 30-60 kN/m..

The grammage of the multi-layered LPB produced by the method (including any pigment-based coating) may for example be 150-400 g/m², such as 180-350 g/m². The grammage of the print layer (excluding any pigment-based coating) may be 35-90 g/m², such as 45-80 g/m². The grammage of the back layer may be 30-70 g/m², such as 40-65 g/m². The grammage of the middle layer web may be 70-150 g/m², such as 80-130 g/m². Grammage, also referred to as basis weight, is measured according to ISO 536:2020.

The density of the multi-layered LPB produced by the method may for example be 640-820 kg/m³, such as 650-800 kg/m³. Density is measured according to ISO 534:2011.

The thickness of the multi-layered LPB produced by the method may for example be 220-600 µm, such as 250-550 µm. Thickness is measured according to ISO 534:2011.

As a second aspect of the present disclosure there is provided a multi-layered liquid packaging board (LPB) comprising a print layer, a back layer and a middle layer, wherein:
- the middle layer is arranged between the print layer and the back layer;
- the middle layer is formed from a middle layer furnish comprising maple chemithermomechanical pulp (CTMP), broke pulp and hydrophobic size;
- the print layer is formed from a print layer furnish, which print layer furnish comprises hydrophobic size;
- the back layer is formed from a back layer furnish, which back layer furnish comprises hydrophobic size.

The examples and embodiments discussed above in connection to the first aspect applies to the second aspect *mutatis mutandis.*

As a third aspect of the present disclosure there is provided the use of the multi-layered LPB according to the second aspect in liquid packaging.

The examples and embodiments discussed above in connection to the first and second aspect applies to the third aspect *mutatis mutandis.*

### EXAMPLES

### Manufacturing of a 3-layered paperboard

In a full-scale paperboard machine, 3-layered (non-LPB) boards were produced. The top layer was coated with a triple-layer coating with a grammage of about 25 g/m² and the back layer with a single-layer coating with a grammage of 6 g/m².

The uncoated paperboard was calendered using a line load of 40-60 kN/m.

The pulp composition in the top layer furnish was a mix of 25 wt% bleached softwood kraft pulp (SW kraft) and 75 wt% bleached hardwood kraft pulp (HW kraft). The pulp composition in the back layer furnish was 100 wt% of bleached SW kraft.

The pulp composition in the middle layer furnish was a mix of 53 wt% CTMP and 47 wt% broke pulp, except in one middle layer furnish that was a mix of 60 wt% CTMP and 40 wt% broke pulp. The wood source of CTMP was a 70wt%/30wt% mixture of birch and spruce, 100 wt% spruce, a 65wt%/35wt% mixture of spruce and birch, a 75wt%/25wt% mixture of maple and spruce, or 100 wt% maple. The refining energy of the CTMP was about 15 kWh/tonne and the refining energy of the broke pulp was about 30 kWh/tonne.

The top layer furnish, middle layer furnish and back layer furnish were each provided from separate headboxes on separate forming wires and thereafter combined by couching.

The total thickness of the multilayer paperboard was 405 µm, 355 µm, 305 µm, 290 µm or 255 µm, wherein maple CTMP was used in paperboards of thicknesses of 290 µm and 255 µm.

### Fibre properties

The CTMP of different wood sources had the properties presented in Table 1 below. Length-weighted average fibre length was measured according to ISO 16065-2:2014.

**Table 1. Properties of the different CTMPs used.**

| **CTMP wood source** | **Approximate CSF (ml)** | **Length-weighted average fibre length (mm)** |
|---|---|---|
| 70wt%/30wt% mixture of birch and spruce | 519 | 1.00 |
| 65wt%/35wt% mixture of spruce and birch | 525 | 1.40 |
| 100 wt% spruce | 630 | 2.5 |
| 100 wt% maple | 380 | 0.72-0.80 |

### Strength in z-direction and surface properties

The produced paperboards were evaluated and results are presented in the figures.

In the figures, the data points marked accordingly represents the source of the CTMP:
- Filled circles (•): 100 wt% maple CTMP in the middle layer
- Filled triangles (▲): 70wt%/30wt% mixture of birch and spruce CTMP in the middle layer
- Filled squares (■): 65wt%/35wt% mixture of spruce and birch CTMP in the middle layer
- Tilted squares (◆): 100 wt% spruce CTMP in the middle layer

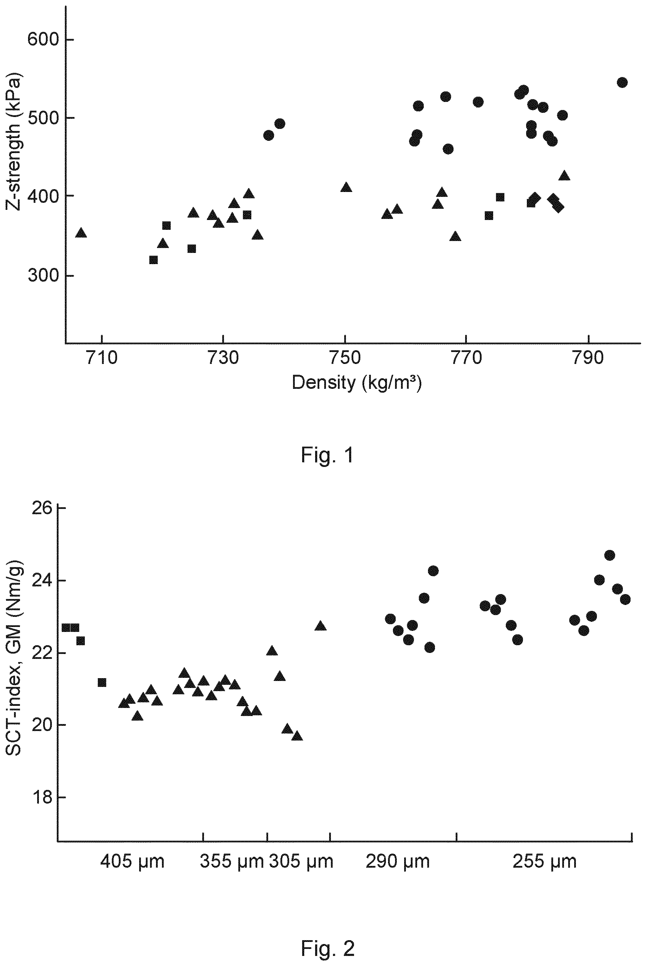

In Fig. 1 the ZD tensile strength is plotted against the density of the paperboards produced. All paperboards containing 100 wt% maple CTMP in the middle layer displayed a higher ZD tensile strength than the other paperboards independently of the density.

Hence, the inventors realized that selection of maple CTMP and broke in the middle layer, the strength properties in z-direction of the provided paperboards were improved without increasing the density. Notably, the 70wt%/30 wt% mixture of birch and spruce, i.e. containing 70wt% of another hardwood CTMP, did not provide the same effect.

The density was lower in the paperboards produced where the line load in the calender was 40 kN/m in combination with a CTMP content of 60 wt% and a CTMP refining of 10 kWh/t.

In Fig. 2 the geometrical SCT-index (SCT-index, GM) is plotted for paperboards of varied thickness. The paperboards containing 100 wt% maple CTMP in the middle layer displayed a higher geometrical SCT-index than the other paperboards. Thereby, also regarding geometrical SCT-index the inventors have realized that usage of maple CTMP and broke provides improved properties.

Hence, not only the ZD tensile strength independently of density was improved by using 100 wt% CTMP from maple as CTMP source in combination with the broke pulp, but also the geometrical SCT-index.

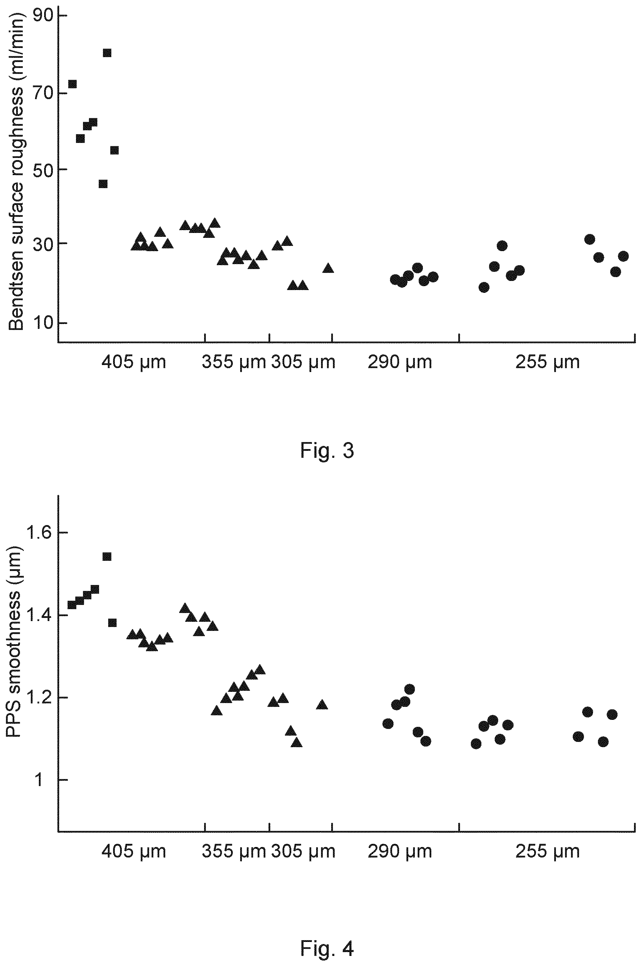

In Figs. 3-4 surface properties of the paperboards are shown. The paperboards having 100 wt% maple CTMP as CTMP source further yielded a low Bendtsen roughness as well as PPS smoothness, which are all properties important for printing.

Moreover, Scott Bond was evaluated for the paperboards and the results are presented in Table 2 below. The paperboards were made of varied thickness, and therefore the Scott Bond values have also been normalized to thickness for illustrative purpose.

| **CTMP wood source** | **Scott Bond (J/m²)** | **Scott Bond normalized to thickness (µJ/m)** |
|---|---|---|
| 70wt%/30wt% mixture of birch and spruce | 204 | 0.63 |
| 100 wt% spruce | 302 | 0.75 |
| 100 wt% maple | 202 | 0.79 |

Hence, when comparing boards of about the same thickness both strength properties in z-direction (ZD tensile strength and Scott Bond) were improved by using a CTMP from maple instead of a CTMP from other types of wood. In a LPB, this strength improvement will reduce the cracking tendency in a middle layer and hence direct the delamination to the interface between the middle layer and the top layer (cracking in the outer layers is not expected due to the composition of these layers).

## Claims

1. A method of producing a multi-layered liquid packaging board (LPB) comprising a print layer, a back layer and a middle layer, said method comprising the steps of:
- providing a maple chemithermomechanical pulp (CTMP) and forming a middle layer furnish comprising the maple CTMP, broke pulp and hydrophobic size;
- forming a middle layer web from the middle layer furnish in a forming section of a full-scale paperboard machine;
- forming a print layer web from a print layer furnish in the forming section, which print layer furnish comprises hydrophobic size;
- forming a back layer web from a back layer furnish in the forming section, which back layer furnish comprises hydrophobic size; and
- forming a multi-layered LPB from the print layer web, middle layer web and back layer web so that the middle layer is arranged between the print layer and the back layer.

2. The method of claim 1, wherein the maple CTMP has a Canadian standard freeness (CSF) measured according to ISO 5267-2:2001 of 300-600 ml, such as 300-500 ml, such as 310-450 ml.

3. The method of claim 1 or 2, wherein the proportion of maple CTMP in the middle layer furnish is 25-55% by dry weight, such as 30-50% by dry weight.

4. The method of any one of the preceding claims, wherein the proportion of broke pulp in the middle layer furnish is 25-55% by dry weight, such as 30-50% by dry weight.

5. The method of any one of the preceding claims, wherein the proportion of kraft pulp in the middle layer furnish is 0-35% by dry weight, such as 5-30% by dry weight.

6. The method of any one of the preceding claims, wherein the provided maple CTMP is obtained by post-refining maple CTMP from a CTMP production process.

7. The method of any one of the preceding claims, wherein the amount of hydrophobic size in the print layer furnish is at least 1.5 kg/tonne dry fibre, such as at least 2.0 kg/tonne dry fibre.

8. The method of any one of the preceding claims, wherein the amount of hydrophobic size in the back layer furnish is at least 1.5 kg/tonne dry fibre, such as at least 2.0 kg/tonne dry fibre.

9. The method of any one of the preceding claims, wherein the amount of hydrophobic size in the middle layer furnish is at least 2.5 kg/tonne dry fibre, such as at least 3.5 kg/tonne dry fibre.

10. The method of any one of the preceding claims, wherein:
the hydrophobic size in the print layer furnish is selected from the group consisting of ASA, AKD, rosin size and combinations thereof;
the hydrophobic size in the back layer furnish is selected from the group consisting of ASA, AKD, rosin size and combinations thereof; and/or
the hydrophobic size in the middle layer furnish is selected from the group consisting of ASA, AKD, rosin size and combinations thereof.

11. The method of any one of the preceding claims, wherein less than 1 g/m² of starch is provided in the interface between the print layer web and the middle layer web.

12. The method of any one of the preceding claims, wherein the z-directional tensile strength according to Tappi T 541 of the multi-layered LPB is at least 240 kPa, such as at least 300 kPa.

13. The method of any one of the preceding claims, wherein Scott Bond strength of the multi-layered LPB is 145-305 J/m², such as 150-250 J/m² measured according to TAPPI T 569 om-09.

14. A multi-layered liquid packaging board (LPB) comprising a print layer, a back layer and a middle layer, wherein:
- the middle layer is arranged between the print layer and the back layer;
- the middle layer is formed from a middle layer furnish comprising maple chemithermomechanical pulp (CTMP), broke pulp and hydrophobic size;
- the print layer is formed from a print layer furnish, which print layer furnish comprises hydrophobic size;
- the back layer is formed from a back layer furnish, which back layer furnish comprises hydrophobic size.

15. Use of the multi-layered LPB according to claim 14 in liquid packaging.
